# EUROPÄISCHE PATENTSCHRIFT

(11) **EP 1 378 527 B1**
(45) Veröffentlichungstag und Bekanntmachung des Hinweises auf die Patenterteilung: **12.11.2008**
(21) Anmeldenummer: 03012766.6
(22) Anmeldetag: 05.06.2003
(51) Int. Cl.: C08F 220/12, C09J 133/06, C09J 131/02

(54) **Haftklebstoffe für Träger aus Weich-PVC**
Pressure sensitive adhesifs for flexible PVC support
Adhésives sensibles à pression pour support en CPV souple

(30) Priorität: 02.07.2002 DE 10229733
(43) Veröffentlichungstag der Anmeldung: 07.01.2004
(73) Patentinhaber: BASF SE, 67056 Ludwigshafen (DE)
(72) Erfinder: Centner, Alexander, Dr., 67435 Neustadt (DE); Schumacher, Karl-Heinz, Dr., 67433 Neustadt (DE); Hartz, Oliver, 68309 Mannheim (DE); Jung, Martin, Dr., 68165 Mannheim (DE)

(56) Entgegenhaltungen:
- EP-A- 0 590 886
- WO-A-94/14891
- FR-A- 1 560 639
- GB-A- 2 070 037

## Beschreibung

Die Erfindung betrifft ein Polymer aufgebaut aus
0,5 bis 30 Gew.-% Vinylacetat (a)
0,1 bis 10 Gew.-% eines Monomeren mit mindestens einer Säureoder Säureanhydridgruppe (b)
5 bis 70 Gew.-% mindestens eines von (a) und (b) verschiedenen Monomeren mit einer Wasserlöslichkeit größer 5 g/1 Wasser (21°C, 1 bar) und einer Glasübergangstemperatur kleiner 15°C (c)
0 bis 20 Gew.-% eines vinylaromatischen Monomeren mit einer Wasserlöslichkeit kleiner 5 g/l Wasser (d),
0 bis 90 Gew.,-% mindestens eines von (a) bis (d) verschiedenen C₁ bis C₂₀ Alkyl(meth)acrylats (e) und
0 bis 40 Gew.-% mindestens eines sonstigen, von(a) bis (e) verschiedenen Monomeren (f).

Weiterhin betrifft die Erfindung wässrige Dispersionen des Polymeren und Klebstoffe bzw. Haftklebstoffe auf Basis dieser Polymeren.

Insbesondere betrifft die Erfindung die Verwendung der Haftklebstoffe zum Verbinden von Substraten, von denen mindestens eins aus Weich-PVC ist und zur Herstellung von selbstklebenden Artikeln mit Weich-PVC als Trägermaterial.

Für Außenanwendungen werden häufig selbstklebende Etiketten und Bänder sowie bedruckte Folien mit Weich-PVC als Trägermaterial eingesetzt. Weich-PVC-Folien enthalten niedermolekulare Weichmacher auf Phthalat Basis. Ein Problem, das durch die Verwendung dieser Weichmacher auftritt, ist, dass der Weichmacher aus der Folie in den Haftklebstoff migrieren kann. Hierdurch werden die anwendungstechnischen Klebeeigenschaften beeinträchtigt. Sowohl die Kohäsion des Klebstoffs, als auch die Adhäsion des Klebstoffs zur Oberfläche, auf die das Etikett bzw. die Folie geklebt wird, werden durch die Migration des Weichmachers in den Klebstoff im allgemeinen deutlich vermindert.

Im Außenbereich sind die selbstklebenden Artikel auch dem Einfluß von Feuchtigkeit ausgesetzt.

Die Einwirkung von Wasser auf den Klebstofffilm führt zu einer unerwünschten weißen Trübung, welche Weißanlaufen genannt wird.

In US 3 547 852, EP-A 978 551, EP-A 454 426 und WO- 98/44064 werden Emulsionspolymerisate unterschiedlicher Zusammensetzung als Haftklebstoffe für selbstklebende Artikel mit Trägern aus Weich-PVC beschrieben.

In der EP 0 590 886 A1 werden Klebstoffzusammensetzungen zur Herstellung von Laminaten beschrieben. Die Zusammensetzungen enthalten ein so genanntes Vinylester/Acryl Copolymer. Beispielhafte Copolymere bestehen aus Vinylacetat, Alkylacrylaten wie z.B. n-Butylacrylat oder 2-Ethylhexylacrylat sowie Säuremonomeren wie z.B. Acrylsäure, Fumarsäure, Itaconsäure oder Methacrylsäure. In der FR 1 560 639 werden Haftklebstoffzusammensetzungen beschrieben. Die Zusammensetzungen enthalten ein Copolymer aus C4- bis C14-Alkylacrylat, einem Vinylester einer gesättigten C2- bis C6-Carbonsäure und einer ethylenisch ungesättigten Dicarbonsäure. Beispielhafte Copolymere bestehen aus n-Butylacrylat oder 2-Ethylhexylacrylat in Kombination mit Vinylacetat sowie Maleinsäureanhydrid oder Itaconsäure. Die GB 2 070 037 A beschreibt ein Verfahren zur Herstellung von Haftklebstofflatices. Beispielhafte Latices enthalten Copolymere aus Vinylacetat, n-Butylacrylat und Acrylsäure.

Aufgabe der vorliegenden Erfindung war eine Verbesserung der Klebeeigenschaften bei Trägern aus Weich-PVC und damit verbundener Migration von Weichmachern sowie eine Verminderung des Weißanlaufens bei Feuchtigkeitseinwirkung.

Demgemäß wurde das eingangs definierte Polymer und seine Verwendung als Haftklebstoff sowie mit dem Haftklebstoff hergestellte selbstklebende Artikel mit Weich-PVC als Trägermaterial gefunden.

Das erfindungsgemäße Polymer ist aus radikalisch polymerisierbaren Verbindungen (Monomere) aufgebaut und durch radikalische Polymerisation der Monomeren erhältlich.

Die nachfolgenden Gewichtsangaben sind immer auf das Polymer bezogen.

Das Polymer ist aufgebaut aus
0,5 bis 30 Gew.-% Vinylacetat (a)
0,1 bis 10 Gew.-% eines Monomeren mit mindestens einer Säure-oder Säureanhydridgruppe (b)
5 bis 70 Gew.-% mindestens eines von (a) und (b) verschiedenen Monomeren mit einer Wasserlöslichkeit größer 5 g/l Wasser (21°C, 1 bar) und einer Glasübergangstemperatur kleiner 15°C (c)
0 bis 20 Gew.-% eines vinylaromatischen Monomeren mit einer Wasserlöslichkeit kleiner 5 g/l Wasser (d),
0 bis 90 Gew.,-% mindestens eines von (a) bis (d) verschiedenen C₁ bis C₂₀ Alkyl(meth)acrylats (e) und
0 bis 40 Gew.-% mindestens eines sonstigen, von (a) bis (e) verschiedenen Monomeren (f).

Der Gehalt an Monomer (a) beträgt vorzugsweise 1 bis 20 Gew.-%, besonders bevorzugt 2 bis 15 Gew.-% und ganz besonders bevorzugt 5 bis 15 Gew.-%.

Der Gehalt an Monomeren (b) beträgt vorzugsweise 0,2 bis 5 % Gew.-%, besonders bevorzugt 1 bis 5 Gew.-% und ganz besonders bevorzugt 2 bis 5 Gew.-%.

Der Gehalt an Monomeren (c) beträgt vorzugsweise 10 bis 60 Gew.-%, besonders bevorzugt 15 bist 50 Gew.-% und ganz besonders bevorzugt 20 bis 40 Gew.-%.

Der Gehalt an Monomeren (d) beträgt vorzugsweise 0 bis 15, besonders bevorzugt 0 bis 10 und ganz besonders bevorzugt 0 bis 8 Gew.-%.

In einer besonders bevorzugten Ausführungsform sind Monomere (d) in Polymer enthalten, der Gehalt beträgt dann mindestens 0,1 Gew.-%, insbesondere mindestens 0,5 Gew.-%.

Der Gehalt an Monomeren (e) beträgt vorzugsweise 20 bis 80 Gew.-%, besonders bevorzugt 30 bis 80 Gew.-%, und ganz besonders bevorzugt 40 bis 70 Gew.-%.

Der Gehalt an Monomeren (f) beträgt vorzugsweise 0 bis 30 Gew.-%, besonders bevorzugt 0 bis 20 Gew.-% und ganz besonders bevorzugt 0 bis 10 Gew.-%.

Monomere (f) sind nicht notwendig um die vorteilhaften Eigenschaften zu erreichen, auf Monomere (f) kann daher auch ganz verzichtet werden.

Vorteilhafte Zusammensetzungen des Polymeren sind z. B.
(a) 1 bis 20 Gew.-%
(b) 0,2 bis 5 Gew.-%
(c) 10 bis 60 Gew.-
(d) 0 bis 15 Gew.-%
(e) 20 bis 80 Gew.-%
(f) 0 bis 30 Gew.-%
oder insbesondere
(a) 2 bis 15 Gew.-%
(b) 1 bis 5 Gew.-%
(c) 15 bis 50 Gew.-%
(d) 0 bis 10 Gew.-%
(e) 30 bis 80 Gew.-%
(f) 0 bis 20 Gew.-%
und besonders bevorzugt
(a) 5 bis 15 Gew.-%
(b) 2 bis 5 Gew.-%
(c) 20 bis 40 Gew.-%
(d) 0 bis 8 Gew.-%
(e) 40 bis 70 Gew.-%
(f) 0 bis 10 Gew.-%

Als Monomere (b) in Betracht kommen z. B. Acrylsäure, Methacrylsäure, Itaconsäure, Maleinsäure, Fumarsäure oder Maleinsäureanhydrid.

Bevorzugt ist Acrylsäure oder Methacrylsäure.

Die Wasserlöslichkeit der Monomeren (c) ist vorzugsweise größer 10 g/1 Wasser. Monomere (c) haben keine Säure- oder Säureanhydridgruppe.

Die Glasübergangstemperatur der Monomeren (c) ist vorzugsweise kleiner 12 °C.

Als Monomere (c) in Betracht kommen z. B. Ethylacrylat und Methylacrylat.

Die Glasübergangstemperatur wird an den Homopolymerisaten nach üblichen Methoden wie Differenthialthermoanalyse oder Differentail Scanning Calorimetrie (s. z. B. ASTM 3418/82, sog. "midpoint temperature") bestimmt.

Als vinylaromatische Verbindungen kommen z. B. Vinyltoluol, a-und p-Methylstyrol, a-Butylstyrol, 4-n-Butylstyrol, 4-n-Decyclstyrol und vorzugsweise Styrol in Betracht.

Bevorzugt ist Styrol.

Monomere (e) sind Alkyl(meth)acrylate, welche nicht unter (b) oder (c) fallen, insbesondere sind sie ausgewählt aus C₄-C₂₀-Alkylacrylaten und C₁-C₂₀-Alkylmethacrylaten.

Bevorzugt sind C₄-C₈-Alkylacrylate, insbesondere n-Butylacrylat, oder 2-Ethylhexylacrylat.

Weiter von (a) bis (e) verschiedene Monomere können mitverwendet werden. Zur Erzielung der vorteilhaften Eigenschaften der Erfindung ist die Mitverwendung weiterer Monomere jedoch nicht notwendig. Insbesondere finden als weitere Monomere (f) keine vernetzenden Monomeren, z. B. solche mit 2 oder mehr als 2 ethylenisch ungesättigten Gruppen Verwendung.

Die Mitverwendung von Vernetzern, sei es interne Vernetzer wie Monomere f) oder externe Vernetzer, welche dem Polymer zu Vernetzung zugesetzt werden, ist im Rahmen dieser Erfindung nicht notwendig.

Bevorzugt liegt das Polymer in Form einer wäßrigen Dispersion vor.

Die Herstellung der Polymere erfolgt dazu in einer bevorzugten Ausführungsform durch Emulsionspolymerisation, es handelt sich daher um ein Emulsionspolymerisat. Bei der Emulsionspolymerisation wird direkt eine wässrige Dispersion des Polymeren.

Die Herstellung kann jedoch z.B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 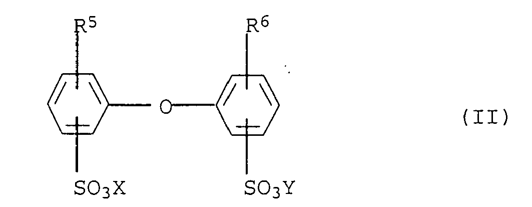 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren, durch die die Molmasse verringert wird. Geeignet sind z.B. Verbindungen mit einer Thiolgruppe wie i tert:-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisätionszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt -bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/ neuer Teilchengeneration/en kann zu einem beliebigen Zeitpunkt erfolgen. Er richtet sich nach den für eine niedrige Viskosität angestrebten Teilchengrößenverteilung.

Das so hergestellte Polymer wird vorzugsweise in Form seiner wäßrigen Dispersion verwendet.

Die Glasübergangstemperatur des Polymeren, bzw. des Emulsionspolymerisats beträgt vorzugsweise -60 bis 0°C, besonders bevorzugt -60 bis -10°C und ganz besonders bevorzugt -40 bis -12°C.

Die Glasübergangstemperatur läßt sich nach üblichen Methoden wie Differentialthermoanalyse oder Differentail Scanning Calorimetrie (s. z.B. ASTM 3418/82, sog. "midpoint temperature") bestimmen.

Das Polymer bzw. die Dispersion des Polymeren eignet sich als Klebstoff, insbesondere als Haftklebstoff.

Die Klebstoffe, bzw. Haftklebstoffe, können allein aus dem Polymeren bzw. der wäßrigen Dispersion des Polymeren bestehen.

Die Klebstoffe und Haftklebstoffe können weitere Zusatzstoffe enthalten Füllstoffe, Farbstoffe, Verlaufsmittel, Verdicker oder Tackifier (klebrigmachende Harze), Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymer (fest/fest).

Insbesondere eignet sich der Klebstoff bzw. Haftklebstoff zum Verbinden von Substraten, dadurch gekennzeichnet, dass zumindest eine der zu verbindenden Substratoberflächen aus Weich-PVC ist. Zum Beispiel kann der Klebstoff auf einen Träger, z.B. aus Papier oder Kunststoff aufgetragen werden und der so beschichtete Träger (z.B. ein Etikett, Klebeband oder Folie) auf ein Substrat aus Weich-PVC (z.B. Fensterprofile etc.) geklebt werden.

Insbesondere eigenen sich die erfindungsgemäßen Klebstoffe bzw. Haftklebstoffe zur Herstellung von selbstklebenden Artikeln, wie Etiketten, Klebebändern oder Klebefolien, z.B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z.B. um Papier, Kunststofffolien aus Polyolefinen oder PVC handeln, bevorzugt ist PVC, besonders bevorzugt Weich-PVC.

Besondere Vorteile hat das erfindungsgemäße Gemisch bei Weich-PVC als Trägermaterial.

Unter Weich-PVC versteht man Polyvinylchlorid, welches einen Gehalt an Weichmachern hat und eine erniedrigte Erweichungstemperatur aufweist. Übliche Weichmacher sind z.B. Phthalate, Epoxide, Adipinsäureester. Der Gehalt der Weichmacher im Weich-PVC beträgt i.a. mehr als 10, insbesondere mehr als 20 Gew.-%.

Bei Weich PVC können Weichmacher in die Klebstoffschicht migrieren und die Klebstoffeigenschaften deutlich verschlechtern. Mit dem erfindungsgemäßen Gemisch wirkt sich eine Migration der Weichmacher nicht oder kaum auf die Eigenschaften des Klebstoffs aus.

Gegenstand der vorliegenden Erfindung sind daher insbesondere selbstklebende Artikel mit Weich-PVC als Trägermaterial und einer darauf beschichteten Klebstoffschicht aus dem obigen Polymeren.

Zur Herstellung der Klebstoffschicht auf dem Trägermaterial kann das Trägermaterial in üblicher Weise beschichtet werden.

Die erhaltenen, beschichteten Substrate werden z.B. als Selbstklebeartikel, wie Etiketten, Klebebänder oder Folien verwendet.

Die selbstklebenden Artikel mit Weich-PVC als Trägermaterial eignen sich insbesondere für Außenanwendungen.

Insbesondere können bedruckte selbstklebende Folien im Außenbereich verwendet und z. B. auf Reklametafeln oder Fahrzeuge aller Art geklebt werden.

Die erfindungsgemäßen selbstklebenden Artikel haben gute anwendungstechnische Eigenschaften, insbesondere eine gute Schälfestigkeit (Adhäsion) und Scherfestigkeit (Kohäsion). Die Eigenschaften bleiben auch bei Weich-PVC als Trägermaterial gut.

Eine Trübung der Klebstoffschicht durch Einwirkung von Feuchtigkeit (Weißanlaufen) ist nicht oder kaum zu beobachten. Die Klebstoffschicht hat daher eine hohe Wasserbeständigkeit.

### Beispiele

### A) Herstellung der Polymerdispersionen

Die Herstellung der Polymerdispersionen erfolgte gemäß nachstehender Vorschrift für Polymerdispersion V3 (siehe Tabelle):
Vorlage: 150 g Wasser
   6,1 g Saatpolymer (Polystyrol)
   2,9 g vom Zulauf 2

### Zulauf 1 (Gesamtmenge 819,4 g)

| | |
|---|---|
| 306,0 g | VE-Wasser |
| 13,3 g | Disponil FES77 (30 %ig in Wasser) |
| 5,0 g | Acrylsäure |
| 50,0 g | Styrol |
| 445,0 g | n-Butylacrylat |

(Disponil FES77: Emulgator, Na-Salz eines ethoxylierten Schwefelsäurehalbesters)

### Zulauf 2 (Gesamtmenge 28,6 g)

28,6 g Natriumpersulfat, 7 %ig Wasser

Zulauf 1 und Zulauf 2 wurden über 3 Stunden bei 90°C gleichmäßig zugegeben. Dann wurde noch 30 Minuten nachpolymerisiert.

Feststoffgehalt der erhaltenen Polymerdispersiori betrug 49,8 Gew.-%, pH-Wert 6,1.

Weitere Dispersionen wurden entsprechend hergestellt.

Die Zusammensetzung der Polymeren ist in der nachstehenden Tabelle angegeben.

| Beispiele | 1 | V1 | V2 | V3 |
|---|---|---|---|---|
| n-Butylacrylat (BA) | 57,5 | 68 | 87 | 89 |
| Ethylacrylat (EA) | 30 | 30 | | |
| Vinylacetat (Vac) | 9 | | 9 | |
| Acrylsäure (AS) | 3,5 | 2 | 4 | 1 |
| Styrol (S) | | | | 10 |

Die Zahlenangaben sind Gew.-%.

### B) Anwendungstechnische Prüfungen

Die Polymerdispersionen (nach Zusatz von Latekoll als Verdicker) wurden mit einer Auftragsmenge von 25 g/m² auf Weich-PVC-Folie (Firma Renolit) beschichtet und 3 Minuten bei 90°C getrocknet.

Anschließend wurde die Schälfestigkeit (Adhäsion) und Scherfestigkeit (Kohäsion) bestimmt.

Der beschichtete Träger wurde in 25 mm breite Prüfstreifen geschnitten. Zur Bestimmung der Scherfestigkeit wurden die Prüfstreifen mit einer verklebten Fläche von 25 mm² auf ein V2A-Prüfblech geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg Gewicht belastet (im Normklima). Das Maß für die Scherfestigkeit war die Zeit bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf einen Prüfkörper aus Stahl geklebt und mit einer 1 kg schweren Rolle 1 mal angerollt. Er wurde nach 20 Minuten mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab. Die Prüfung erfolgte ebenfalls im Normklima.

Die Prüfungen der Scher- und Schälfestigkeit wurden auch nach einer Wärmelagerung durchgeführt. Die Wärmelagerung der Prüfverbunde (3 Tage, 70°C) soll eine beschleunigtes Altern der Proben simulieren und somit eine forcierte Migration des Weichmachers aus dem PVC-Träger in die Klebeschicht bewirken.

### Wasserbeständigkeit (Weißanlaufen)

Die Prüfstreifen wurden in ein Wasserbad gehängt. Die Trübung des Klebstofffilms wurde über die Zeit beobachtet. Es wurde der Zeitpunkt bestimmt, an dem eine deutliche Trübung erkennbar wurde. Je länger der Zeitraum, um so besser ist die Wasserbeständigkeit.

| Schälfestigkeiten vor Wärmelagerung [N/25 mm] | |
|---|---|
| 1: | 17,9 |
| V1: | 15,4 |
| V2: | 16 |
| V3: | 15,6 |

| Scherfestigkeiten vor Wärmelagerung [h]: | |
|---|---|
| 1 : | 60 |
| V1: | 13 |
| V2: | 100 |
| V3 : | 39 |

| Schälfestigkeiten nach Wärmelagerung [N/25 mm] | |
|---|---|
| 1: | 9,2 |
| V1: | 7,2 |
| V2: | 6,6 |
| V3: | 8,5 |

| Scherfestigkeiten nach Wärmelagerung [h]: | |
|---|---|
| 1: | 50 |
| V1: | 3,4 |
| V2: | 8,9 |
| V3: | 16 |

| Weißanlaufverhalten: | |
|---|---|
| Signifikante Trübung des Films bei Wasserlagerung nach: | |
| 1: | 2 h |
| V1: | 1 h |
| V2: | 0,5 h |
| V3: | 20 min |

## Patentansprüche

1. Polymer aufgebaut aus
0,5 bis 30 Gew.-% Vinylacetat (a),
0,1 bis 10 Gew.-% eines Monomeren mit mindestens einer Säure-oder Säureanhydridgruppe (b),
5 bis 70 Gew.-% mindestens eines von (a) und (b) verschiedenen Monomeren mit einer Wasserlöslichkeit größer 5 g/l Wasser (21°C, 1 bar) und einer Glasübergangstemperatur kleiner 15°C (c),
0 bis 20 Gew.-% eines vinylaromatischen Monomeren mit einer Wasserlöslichkeit kleiner 5 g/l Wasser (d),
0 bis 90 Gew.,-% mindestens eines von (a) bis (d) verschiedenen C₁ bis C₂₀ Alkyl(meth)acrylats (e) und
0 bis 40 Gew.-% mindestens eines sonstigen, von (a) bis (e) verschiedenen Monomeren (f).

2. Polymer gemäß Anspruch 1, aufgebaut aus
1 bis 20 Gew.-% (a)
0,2 bis 5 Gew.-% (b)
10 bis 60 Gew.-% (c)
0 bis 15 Gew.-% (d)
20 bis 80 Gew.-% (e)
0 bis 30 Gew.-% (f)

3. Polymer gemäß Anspruch 1 oder 2, enthaltend mindestens 0,1 Gew.-% (d).

4. Polymer gemäß einem der Ansprüche 1 oder 2, wobei es sich bei (f) nicht um vernetzende Monomere handelt.

5. Wässrige Dispersion eines Polymeren gemäß einem der Ansprüche 1 bis 4.

6. Klebstoffe, enthaltend ein Polymer gemäß einem der Ansprüche 1 bis 4 oder eine Dispersion gemäß Anspruch 5.

7. Haftklebstoffe, enthaltend ein Polymer gemäß einem der Ansprüche 1 bis 4 oder eine Dispersion gemäß Anspruch 5.

8. Verwendung der Haftklebstoffe gemäß Anspruch 7 zum Verbinden von zwei Substraten, **dadurch gekennzeichnet, dass** zumindest eins der Substrate aus Weich-PVC ist.

9. Verwendung gemäß Anspruch 8, **dadurch gekennzeichnet, dass** die Haftklebstoffe auf Trägermaterial aus Weich-PVC aufgebracht werden.

10. Selbstklebende Artikel,erhältlich durch Verwendung gemäß Anspruch 9.

## Claims

1. A polymer synthesized from
from 0.5 to 30% by weight of vinyl acetate (a),
from 0.1 to 10% by weight of a monomer containing at least one acid or acid anhydride group (b),
from 5 to 70% by weight of at least one monomer other than (a) and (b), having a solubility of more than 5 g/l water (21°C, 1 bar) and a glass transition temperature of less than 15°C (c),
from 0 to 20% by weight of a vinylaromatic monomer having a solubility of less than 5 g/l water (d),
from 0 to 90% by weight of at least one C₁ to C₂₀ alkyl (meth)acrylate (e) other than (a) to (d), and
from 0 to 40% by weight of at least one further monomer (f) other than (a) to (e).

2. The polymer according to claim 1, synthesized from
from 1 to 20% by weight of (a)
from 0.2 to 5% by weight of (b)
from 10 to 60% by weight of (c)
from 0 to 15% by weight of (d)
from 20 to 80% by weight of (e)
from 0 to 30% by weight of (f).

3. The polymer according to claim 1 or 2, comprising at least 0.1% by weight of (d).

4. The polymer according to either of claims 1 and 2, wherein (f) does not comprise crosslinking monomers.

5. An aqueous dispersion of a polymer according to any of claims 1 to 4.

6. An adhesive comprising a polymer according to any of claims 1 to 4 or a dispersion according to claim 5.

7. A pressure sensitive adhesive comprising a polymer according to any of claims 1 to 4 or a dispersion according to claim 5.

8. The use of an adhesive according to claim 7 to join two substrates, wherein at least one of the substrates is made of plasticized PVC.

9. The use according to claim 8, wherein the adhesive is applied to backing material made of plasticized PVC.

10. A self-adhesive article obtainable through use according to claim 9.

## Revendications

1. Polymère à base de
- 0,5 à 30% en poids d'acétate de vinyle (a),
- 0,1 à 10% en poids d'un monomère présentant au moins un groupe acide ou anhydride d'acide (b),
- 5 à 70% en poids d'au moins un monomère différent de (a) et (b) présentant une solubilité dans l'eau supérieure à 5 g/l d'eau (21°C, 1 bar) et une température de transition vitreuse inférieure à 15°C (c),
- 0 à 20% en poids d'un monomère de type aromatique de vinyle présentant une solubilité dans l'eau inférieure à 5 g/l d'eau (d),
- 0 à 90% en poids d'au moins un (méth)acrylate d'alkyle en C₁ à C₂₀ (e) différent de (a) à (d) et
- 0 à 40% en poids d'au moins autre monomère (f) différent de (a) à (e).

2. Polymère selon la revendication 1 à base de
- 1 à 20% en poids de (a)
- 0,2 à 5% en poids de (b)
- 10 à 60% en poids de (c)
- 0 à 15% en poids de (d)
- 20 à 80% en poids de (e)
- 0 à 30% en poids de (f).

3. Polymère selon la revendication 1 ou 2, contenant au moins 0,1% en poids de (d).

4. Polymère selon l'une quelconque des revendications 1 ou 2, où il ne s'agit pas, pour (f), de monomères réticulants.

5. Dispersion aqueuse d'un polymère selon l'une quelconque des revendications 1 à 4.

6. Adhésifs contenant un polymère selon l'une quelconque des revendications 1 à 4 ou une dispersion selon la revendication 5.

7. Autoadhésifs contenant un polymère selon l'une quelconque des revendications 1 à 4 ou une dispersion selon la revendication 5.

8. Utilisation des autoadhésifs selon la revendication 7 pour l'assemblage de deux substrats, **caractérisée en ce qu'**au moins un des substrats est en PVC souple.

9. Utilisation selon la revendication 8, **caractérisée en ce que** les autoadhésifs sont appliqués sur un matériau support en PVC souple.

10. Article autoadhésif pouvant être obtenu par l'utilisation selon la revendication 9.
